# EUROPÄISCHE PATENTSCHRIFT

(11) **EP 2 237 303 B1**
(45) Veröffentlichungstag und Bekanntmachung des Hinweises auf die Patenterteilung: **17.09.2014**
(21) Anmeldenummer: 10001704.5
(22) Anmeldetag: 19.02.2010
(51) Int. Cl.: H01H 85/54, H02B 11/26

(54) **Sicherungseinheit für ein Schaltfeld einer elektrischen Schaltanlage, insbesondere einer luftisolierten Mittelspannungsschaltanlage**
Fuse unit for a control panel of an electrical switch assembly, in particular an air-insulated medium voltage switch assembly
Unité de fusible pour un panneau d'interrupteurs d'une installation de commutation électrique, notamment d'une installation de commutation de moyenne tension à air isolé

(30) Priorität: 03.04.2009 DE 102009017467
(43) Veröffentlichungstag der Anmeldung: 06.10.2010
(73) Patentinhaber: Schneider Electric Sachsenwerk GmbH, 93055 Regensburg (DE)
(72) Erfinder: Muhammad Hanui, Dardi, 93055 Regensburg (DE); Winkler, Matthias, 34090 Montpellier (FR)
(74) Vertreter: DREISS Patentanwälte PartG mbB

(56) Entgegenhaltungen:
- DE-A1- 4 116 058
- DE-U- 1 789 290
- DE-U1- 8 303 264
- GB-A- 1 080 072
- US-A- 4 489 362

## Beschreibung

Die Erfindung betrifft eine Sicherungseinheit für ein Schaltfeld einer elektrischen Schaltanlage, insbesondere einer luftisolierten Mittelspannungsschaltanlage.

Es sind luftisolierte Mittelspannungsschaltanlagen bekannt, bei denen in einem der Schaltfelder eine Stromführung von den Sammelschienen über Leistungsschalter und über Sicherungen zu den Kabelabgängen erfolgt. Bei diesen Anlagen bildet jeder der Leistungsschalter mit der zugehörigen Sicherung eine Baueinheit. Ein Austausch der Sicherung erfordert es, dass die gesamte Baueinheit aus dem Schaltfeld ausgebaut werden muss, um dann die Sicherung aus der Baueinheit auszubauen und durch eine neue Ersatz-Sicherung zu ersetzen. Der damit verbundene Aufwand ist groß und ein Austausch ist üblicherweise nicht ohne Werkzeug möglich.

DE 83 03 264 U1 zeigt einen Sicherungsanbau für eine gekapselte Schaltanlage. Ein Isolierstoffgehäuse umschließt eine Hochspannungs-Sicherung. Im Isolierstoffgehäuse ist eine Bahn für einen einschiebbaren Schlitten vorgesehen. Der Schlitten trägt die Aufnahmekontaktstücke sowie zwei Einfahrkontaktstücke, die jeweils mit einem der Aufnahmekontaktstücke verbunden und in ein Gegenkontaktstück einschiebbar sind, das mit einem der Stromanschlüsse verbunden ist.

US 4 489 362 A2 zeigt eine elektrische Schaltanlage, die einen ein- und ausfahrbaren Schlitten für eine Sicherung umfasst. Der Schlitten kann bezüglich der Schaltanlage festgelegt werden.

Aufgabe der Erfindung ist es, eine Sicherungseinheit für ein Schaltfeld einer elektrischen Schaltanlage derart zu verbessern, dass die Schaltanlage sicherer bedienbar und wartbar ist.

Die Erfindung löst diese Aufgabe durch eine Sicherungseinheit nach dem Anspruch 1.

Erfindungsgemäß ist die Sicherung auf einem Schlitten angeordnet und das Schaltfeld weist einen Träger auf. Der Schlitten und der Träger sind derart aneinander angepasst, dass der Schlitten auf dem Träger aufsetzbar ist. Die Sicherung kann aus einem verbundenen Zustand durch eine Bewegung des Schlittens in einen nicht-verbundenen Zustand überführt werden.

Die Sicherung ist also nicht fest in das Schaltfeld eingebaut. Statt dessen kann die Sicherung zusammen mit dem Träger in den nicht-verbundenen Zustand überführt werden, in dem die gesamte Baueinheit aus dem Schaltfeld herausgenommen werden kann. Bei der Herausnahme muss die gegebenenfalls noch heiße Sicherung selbst nicht angefasst werden. Weiterhin kann die Sicherung ohne großen Aufwand über den Schlitten kontaktiert werden. Dies kann derart ausgebildet sein, dass der Austausch einer Sicherung kein Werkzeug erforderlich macht. Damit ist es insgesamt möglich, eine ausgelöste Sicherung sofort, schnell, ohne Werkzeug und auch ansonsten mit einem sehr geringen Aufwand auszutauschen.

Besonders zweckmäßig ist es, wenn der Schlitten auf dem Träger verschiebbar ist. Damit kann eine ausgelöste Sicherung auf dem Schlitten entlang dem Träger aus dem Schaltfeld herausgezogen werden. Die Bedienperson muss also nicht in irgendeiner Weise den Innenraum des Schaltfelds betreten. Entsprechendes gilt auch für das Überführen des Schlittens mit der ausgetauschten Sicherung aus dem nicht-verbundenen Zustand in den verbundenen Zustand. Der Austausch einer Sicherung ist insoweit gefahrloser als bisher durchzuführen.

Bei einer besonders vorteilhaften Ausgestaltung der Erfindung, die auch eine separate Erfindung darstellen kann, ist die Sicherungseinheit mit mindestens zwei Sicherungen versehen, die mit jeweils zugehörigen elektrischen Komponenten des Schaltfelds verbindbar sind. Jede der Sicherungen kann einen verbundenen Zustand aufweisen, in dem die jeweilige Sicherung mit den jeweils zugehörigen elektrischen Komponenten des Schaltfelds verbunden ist. Jede der Sicherungen kann einen verriegelten Zustand aufweisen kann, in dem die jeweilige Sicherung innerhalb des Schaltfelds verriegelt ist. Weiterhin ist ein Bereit-Zustand vorhanden, in dem alle Sicherungen des Schaltfelds sich in ihrem verriegelten Zustand befinden.

Durch diese Maßnahmen wird also nicht nur die Verriegelung einer einzelnen Sicherung erreicht, sondern es wird zusätzlich angezeigt, sobald alle vorhandenen Sicherungen sich jeweils in ihrem verriegelten Zustand befinden. Dies ist dann der Bereit-Zustand, in dem das Schaltfeld betriebsbereit ist.

Besonders zweckmäßig ist es, wenn ein Übergang in den verbundenen Zustand und/oder in den verriegelten Zustand jeweils manuell durchführbar ist. Beispielsweise kann der Übergang von einem nicht-verbundenen Zustand in den verbundenen Zustand dadurch erreicht werden, dass eine Bedienperson die Sicherung zusammen mit dem Schlitten entlang dem Träger bewegt. Der Übergang von dem verbundenen Zustand in den verriegelten Zustand kann beispielsweise dadurch erreicht werden, dass eine Bedienperson einen entsprechenden Schieber betätigt.

Bei einer Ausgestaltung der Erfindung führt, ausgehend vom Bereit-Zustand, eine Auslösung einer der Sicherungen zu einem Übergang in den verbundenen Zustand. Damit wird gewährleistet, dass der Bereit-Zustand immer nur dann angezeigt wird, wenn alle Sicherungen intakt, verbunden und verriegelt sind. Weiterhin wird dadurch erreicht, dass die ausgelöste Sicherung nunmehr im verbundenen und damit nicht-verriegelten Zustand ausgetauscht werden kann.

Besonders vorteilhaft ist es, wenn in Abhängigkeit von dem Bereit-Zustand eine der elektrischen Komponenten des Schaltfelds, beispielsweise ein Leistungsschalter, steuerbar ist. Der Leistungsschalter kann beispielsweise immer dann in seinen geöffneten Zustand gesteuert werden, wenn der Bereit-Zustand nicht vorhanden ist.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

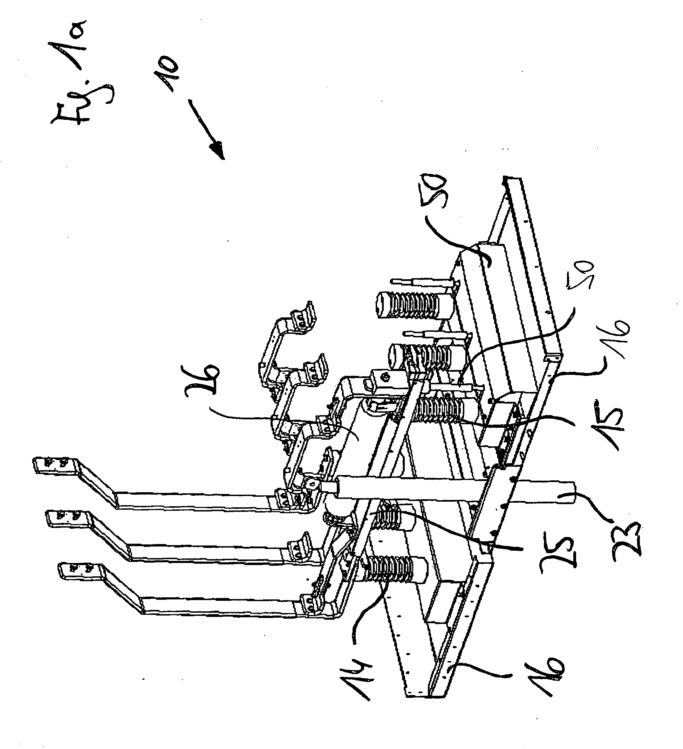

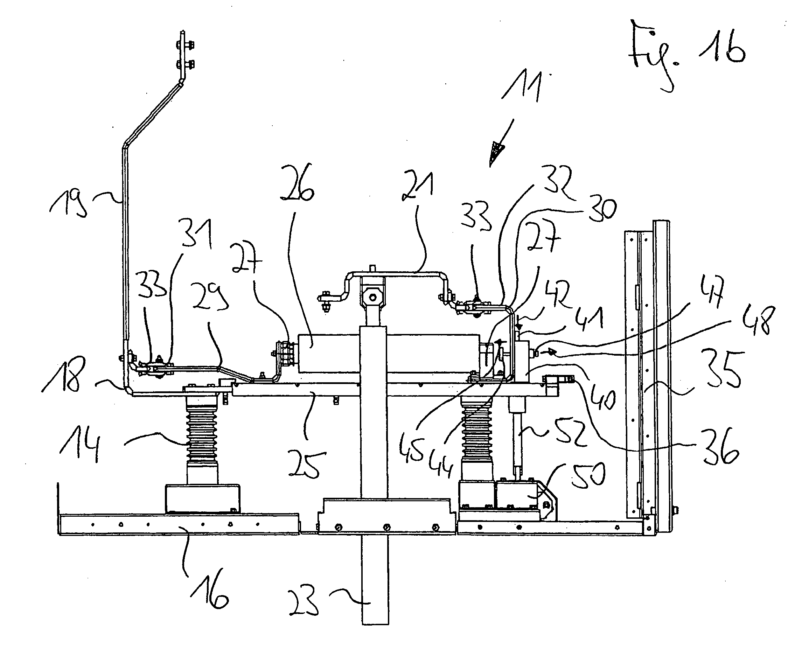

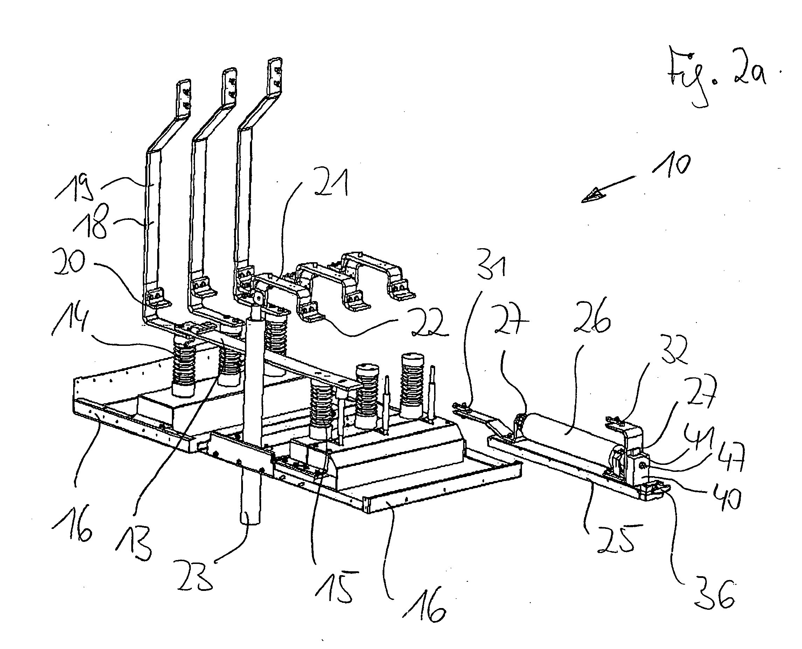

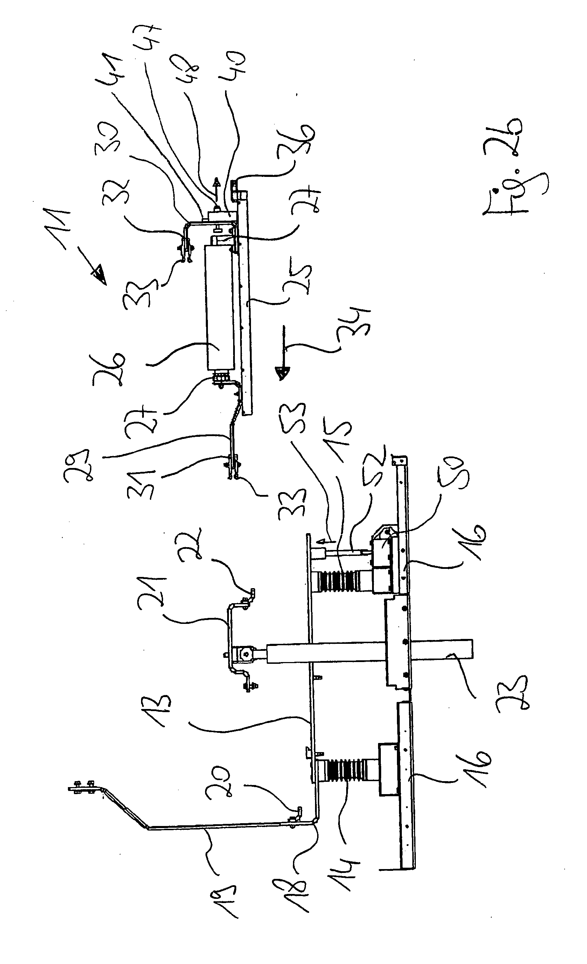

Figuren 1a, 1b zeigen eine schematische Perspektivansicht und eine schematische Seitenansicht eines Ausführungsbeispiels einer erfindungsgemäßen Sicherungseinheit mit eingebauter Sicherung, und Figuren 2a, 2b zeigen eine schematische Perspektivansicht und eine schematische Seitenansicht der Sicherungseinheit der Figuren 1a, 1b mit herausgezogener Sicherung.

Eine elektrische Schaltanlage, insbesondere eine luftisolierte Mittelspannungsschaltanlage, besteht aus einer Mehrzahl von Schaltfeldern. Die Schaltfelder sind über Sammelschienen elektrisch miteinander verbunden. In den einzelnen Schaltfeldern sind unterschiedliche elektrische Komponenten untergebracht, beispielsweise Leistungsschalter, Trenner/Erder-Schalter und dergleichen. Über diese elektrischen Komponenten werden unter anderem Abzweigungen von den Sammelschienen zu elektrischen Verbrauchern realisiert.

Beim vorliegenden Ausführungsbeispiel wird von einem Schaltfeld ausgegangen, das ein schrankförmiges Gehäuse aufweist, in dessen oberem Bereich die Sammelschienen und Leistungsschalter vorhanden sind. Über die Leistungsschalter ist ein Abgang von den Sammelschienen zu einem elektrischen Verbraucher realisiert. Dieser Abgang ist mit Hilfe von elektrischen Kabeln ausgeführt, die durch einen im unteren Bereich des Schaltfelds vorgesehenen Kabelanschlussraum nach unten aus dem Schaltfeld herausgeführt sind.

Beim vorliegenden Ausführungsbeispiel ist in dem Kabelanschlussraum eine Sicherungseinheit 10 untergebracht. Es versteht sich, dass die Sicherungseinheit 10 auch in einem anderen Bereich des Schaltfelds untergebracht sein kann. Beim vorliegenden Ausführungsbeispiel ist die Sicherungseinheit 10 in elektrischer Hinsicht den nach unten abgehenden elektrischen Kabeln zugeordnet. Es versteht sich, dass die Sicherungseinheit 10 auch anderen elektrischen Kabeln oder Stromschienen des Schaltfelds zugeordnet sein kann.

Die Sicherungseinheit 10 ist im vorliegenden Ausführungsbeispiel dreiphasig ausgebildet. Dies geht insbesondere aus den Perspektivansichten der Figuren 1a, 2a hervor. Es versteht sich, das die Sicherungseinheit 10 auch eine andere Anzahl von Phasen aufweisen kann.

Die Sicherungseinheit 10 ist aus drei gleichartig aufgebauten Sicherungskomponenten 11 aufgebaut. Jede Sicherungskomponente 11 gehört zu einer Phase der Sicherungseinheit 10. Eine derartige einzelne Sicherungskomponente 11 ist in den Seitenansichten der Figuren 1b, 2b dargestellt. Nachfolgend wird eine dieser Sicherungskomponenten 11 beschrieben.

Bei der Sicherungskomponente 11 ist ein aus isolierendem Material bestehender Träger 13 innerhalb des Kabelanschlussraums auf zwei isolierenden Stützer 14, 15 befestigt. Die Stützer 14, 15 sind ihrerseits am Boden des Kabelanschlussraums auf Gehäuseteilen 16 des Schaltfelds befestigt. Der Träger 13 ist geradlinig ausgebildet und innerhalb des Schaltfelds etwa horizontal ausgerichtet. Durch den Träger 13 wird eine Längsrichtung innerhalb des Kabelanschlussraums festgelegt.

Weiterhin ist innerhalb des Kabelanschlussraums eine erste Stromschiene 18 ortsfest an dem Stützer 14 befestigt, die einerseits ein nach oben abgehendes freies Ende 19 aufweist, und an der andererseits ein freies Ende 20 befestigt ist, das einen ersten Stromanschluss darstellt.

Das nach oben abgehende freie Ende 19 ist mit dem zu der jeweiligen Phase zugehörigen Leistungsschalter verbunden.

In ähnlicher Weise ist innerhalb des Kabelanschlussraums eine zweite Stromschiene 21 ortsfest angeordnet, die ein freies Ende 22 aufweist, das einen zweiten Stromanschluss darstellt. Die Befestigung der zweiten Stromschiene 21 innerhalb des Schaltfelds ist in den Figuren nicht näher dargestellt. Die zweite Stromschiene 21 ist mit einem elektrischen Kabel 23 verbunden, das nach unten abgeht und den Kabelanschlussraum durch den Boden des Kabelanschlussraums verlässt.

Die beiden Stromschienen 18, 21 mit den beiden freien Enden 20, 22 sind in einer gemeinsamen, etwa vertikal und parallel zur Längsrichtung ausgerichteten Ebene angeordnet. Die beiden freien Enden 20, 22 sind etwa horizontal ausgerichtet und zeigen in dieselbe Richtung. Aus den Seitenansichten der Figuren 1b, 2b ist zu entnehmen, dass die beiden freien Enden 20, 22 in Längsrichtung des Trägers 13 versetzt zueinander angeordnet sind.

Auf dem Träger 13 ist ein aus isolierendem Material bestehender Schlitten 25 angeordnet. Der Schlitten 25 ist geradlinig ausgebildet und besitzt eine Länge, die etwa der Länge des Trägers 13 entspricht. Der Schlitten 25 und der Träger 13 sind derart aneinander angepasst, dass der Schlitten 25 auf den ortsfesten Träger 13 aufgesetzt werden kann und in Längsrichtung desselben verschoben werden kann. Sofern sich der Schlitten 25 auf dem Träger 13 befindet, ist der Schlitten 25 etwa horizontal und in Längsrichtung ausgerichtet.

Auf dem Schlitten 25 ist eine Sicherung 26 befestigt, die sich über einen Großteil der Länge des Schlittens 25 erstreckt. Die Befestigung der Sicherung 26 wird dadurch erreicht, dass auf dem Schlitten 25 topfförmige Halterungen 27 vorgesehen sind, in die zylinderförmige Enden der Sicherung 26 ohne eine Zuhilfenahme von Werkzeugen eingeklemmt werden können. Die Halterungen 27 sind elektrisch leitfähig, so dass über die Halterungen 27 eine elektrische Verbindung zu der Sicherung 26 herstellbar ist. Es versteht sich, dass auch andersartige Befestigungsarten vorgesehen sein können, bei denen die Sicherung 26 beispielsweise mit dem Schlitten 25 verschraubt wird.

An den beiden Enden des Schlittens 25 sind eine dritte und eine vierte Stromschiene 29, 30 befestigt, die elektrisch mit der jeweils zugehörigen Halterung 27 verbunden sind. Die dritte und vierte Stromschiene 29, 30 weisen jeweils ein freies Ende 31, 32 auf, die beide in dieselbe Richtung ausgerichtet sind. Das freie Ende 31 der dritten Stromschiene 29 ist zur Verbindung mit dem ersten Stromanschluss und das freie Ende 32 der vierten Stromschiene 30 ist zur Verbindung mit dem zweiten Stromanschluss vorgesehen.

Sofern sich der Schlitten 25 auf dem Träger 13 befindet, sind die dritte und vierte Stromschiene 29, 30 mit den zugehörigen freien Enden 31, 32 in der bereits erwähnten, etwa vertikal ausgerichteten Ebene angeordnet, in der auch die erste und die zweite Stromschiene 18, 21 vorhanden sind. Die Richtung der freien Enden 31, 32 der dritten und vierten Stromschiene 29, 30 ist dabei entgegengesetzt zu der Richtung der freien Enden 20, 22 der ersten und zweiten Stromschiene 18, 21 ausgerichtet. An den freien Enden 31, 32 der dritten und vierten Stromschiene 29, 30 ist jeweils eine U-förmige Öffnung 33 angebracht, die an die freien Enden 20, 22 der ersten und zweiten Stromschiene 18, 21 angepasst ist.

Wie erläutert, sind die erste und zweite Stromschiene 18, 21 mit den zugehörigen freien Enden 20, 22 ortsfest innerhalb des Kabelanschlussraums angeordnet, während die dritte und vierte Stromschiene 29, 30 mit den zugehörigen freien Enden 31, 32 auf dem Schlitten 25 befestigt sind. Wie ebenfalls erläutert, ist der Schlitten 25 entlang dem Träger 13 verschiebbar ausgebildet.

Die vier Stromschienen 18, 21, 29, 30 und insbesondere die zugehörigen freien Enden 20, 22, 31, 32 sind derart zueinander ausgerichtet, dass die folgenden beiden Zustände entstehen können.

In einem ersten Zustand, der in den Figuren 1a, 1b gezeigt ist, und der als verbundener Zustand bezeichnet wird, sind die freien Enden 20, 22 der ersten und der zweiten Stromschiene 18, 21 in die U-förmigen Öffnungen 33 der dritten und der vierten Stromschiene 29, 30 eingeführt. Es ist somit eine elektrische Verbindung zwischen der ersten Stromschiene 18 und der dritten Stromschiene 29 über den ersten Stromanschluss sowie zwischen der zweiten Stromschiene 21 und der vierten Stromschiene 30 über den zweiten Stromanschluss vorhanden. Dies ist gleichbedeutend damit, dass eine elektrische Verbindung von dem mit der ersten Stromschiene 18 verbundenen Leistungsschalter über die Sicherung 26 zu der zweiten Stromschiene 21 und damit zu dem Kabel 23 existiert.

In einem zweiten Zustand, der in den Figuren 2a, 2b gezeigt ist, und der als nicht-verbundener Zustand bezeichnet wird, stehen die freien Enden 20, 22 der ersten und der zweiten Stromschiene 18, 21 nicht mit den freien Enden 31, 32 der dritten und der vierten Stromschiene 29, 30 in Verbindung. Es existiert also keine elektrische Verbindung von der ersten Stromschiene 18 über die Sicherung 26 zu der zweiten Stromschiene 21.

Der verbundene Zustand kann dadurch erreicht werden, dass der Schlitten 25 manuell entlang dem Träger 13 in Längsrichtung zu der ersten Stromschiene 18 geschoben wird, und zwar solange, bis die erläuterte elektrische Verbindung entsteht. Die Verschieberichtung in den verbundenen Zustand ist in der Figur 2b mit dem Pfeil 34 gekennzeichnet. Die freien Enden 20, 22 sind entgegen der Richtung des Pfeils 34 und die freien Enden 31, 32 mit den Öffnungen 33 sind in Richtung des Pfeils 34 ausgerichtet, so dass bei einer Bewegung des Schlittens 25 in Richtung des Pfeils 34 die freien Enden 20, 22 automatisch in die Öffnungen 33 der freien Enden 31, 32 eingreifen.

Im verbundenen Zustand befindet sich der Schlitten 25 im wesentlichen vollständig auf dem Träger 13. Der nichtverbundene Zustand kann dadurch erreicht werden, dass der Schlitten 25 manuell in Gegenrichtung zu dem Pfeil 34 entlang dem Träger 13 verschoben bzw. gezogen wird. Bei dem Übergang von dem verbundenen in den nicht-verbundenen Zustand verlässt der Schlitten 25 immer mehr den Träger 13 und kann manuell von dem Träger 13 abgehoben werden.

Mit dem Herausziehen des Schlittens 25 von dem verbundenen in den nicht-verbundenen Zustand kann die gesamte, zu einer Phase zugehörige Sicherungskomponente 11 der Sicherungseinheit 10 somit von dem Träger 13 abgenommen und damit aus dem Kabelanschlussraum des Schaltfelds herausgenommen werden. Hierzu ist es nur erforderlich, zuvor eine den Kabelanschlussraum verschließende Tür 35 zu öffnen. Ein Austausch einer Sicherung 26 kann damit dadurch erreicht werden, dass - wie erläutert wurde - die Tür 35 geöffnet und die erwünschte Sicherungskomponente 11 in Richtung des Pfeils 34 herausgezogen und dann aus dem Schaltfeld herausgenommen und vorzugsweise durch eine vorhandene gleichartige Ersatz-Sicherungskomponente ersetzt wird. Die Ersatz-Sicherungskomponente kann dann sofort ohne weitere Montagetätigkeit und insbesondere ohne die Verwendung eines Werkzeugs wieder auf den Träger 13 aufgesetzt und in Gegenrichtung zu dem Pfeil 34 in den verbundenen Zustand geschoben werden. Zum Verschieben und Herausnehmen der Sicherungskomponente 11 ist dieselbe mit einem der Tür 35 zugewandten Griff 36 versehen.

Alternativ kann ein Austausch der Sicherung 26 bei nicht vorhandener Ersatz-Sicherungskomponente dadurch erreicht werden, dass die Sicherungskomponente 11 mit der auszutauschenden Sicherung 26 aus dem Schaltfeld herausgenommen wird. Dann kann die Sicherung 26 durch eine gleichartige Ersatz-Sicherung ersetzt werden. Sind die erläuterten Halterungen 27 vorhanden, so kann dieser Austausch der Sicherung 26 ohne Werkzeug durchgeführt werden. Ansonsten muss die Sicherung 26 mit den erforderlichen Werkzeugen gelöst, die Ersatz-Sicherung eingesetzt und wieder befestigt werden. Danach kann der Schlitten 25 mit der Ersatz-Sicherung auf den Träger 13 aufgesetzt und in den verbundenen Zustand geschoben werden.

Die Sicherungskomponente 11 ist mit einem Verriegelungsmechanismus 40 versehen, der auf dem Schlitten 25 befestigt ist. Befindet sich der Schlitten 25 in dem verbundenen Zustand und ist der Schlitten 25 dabei in einer zur Verriegelung vorgesehenen Position auf dem Träger 13 angeordnet, so wird durch eine manuelle Betätigung eines Schiebers 41 in Richtung des in der Figur 1b angegebenen Pfeils 42 eine Verriegelung des Schlittens 25 mit dem Träger 13 erreicht. Die Betätigung des Schiebers 41 bewirkt dabei, dass sich ein (nicht-dargestellter) Stift innerhalb des Betätigungsmechanismus in Richtung des Pfeils 42 bewegt, und dass bei dieser Bewegung der Stift in eine zur Verriegelung vorgesehene (nicht-dargestellte) Öffnung in dem Träger 13 eintaucht. In dem verriegelten Zustand erfolgt eine Verrastung des Stifts.

Bei der vorstehend erläuterten Verriegelung wird durch den Schieber 41 auch ein Auslöser 44 in Längsrichtung gemäß dem Pfeil 45 auf die Sicherung 26 zubewegt, und zwar derart, dass der Auslöser 44 an der Sicherung 26 anliegt oder einen geringen Abstand zu der Sicherung 26 aufweist. Auch dieser Auslöser 41 rastet dann in der beschriebenen Position ein. Der Zustand, bei dem der Schlitten 25 und der Träger 13 verriegelt sind und der Auslöser 44 der Sicherung 26 zugeordnet ist, wird als verriegelter Zustand bezeichnet. In diesem verriegelten Zustand ist auch die Sicherung 26 über den Schlitten 25 innerhalb des Schaltfelds verriegelt.

Wird die Sicherung 26 im Betrieb beispielsweise durch einen überhöhten Strom ausgelöst, so hat dies zur Folge, dass ein (nicht-dargestellter) Schlagbolzen sich aus der Sicherung 26 hieraus in Längsrichtung auf den Auslöser 44 zubewegt. Durch die ausgelöste Sicherung 26 wird der Stromfluss unterbrochen. Durch den Schlagbolzen wird der Auslöser 44 in Gegenrichtung zu dem Pfeil 45 bewegt, was zur Folge hat, dass die Verriegelung des Schlittens 25 mit dem Träger 13 aufgehoben wird. Dies wird dadurch erreicht, die erläuterte Rastung beendet wird und der erwähnte Stift von einer (nicht-dargestellten) Feder aus der erwähnten Öffnung des Trägers 13 herausgezogen wird. Durch die erläuterte Auslösung der Sicherung 26 wird also der verriegelte Zustand aufgehoben.

Alternativ kann der verriegelte Zustand dadurch aufgehoben werden, dass ein Bolzen 47 manuell in Richtung des Pfeils 48 herausgezogen und damit der Auslöser 44 unabhängig von dem Schlagbolzen der Sicherung 26 in Gegenrichtung zu dem Pfeil 45 bewegt wird.

Unabhängig von der Auslösung erfolgt somit ein Übergang von dem verriegelten Zustand in den verbundenen Zustand der Sicherung 26.

Wie bereits erwähnt, weist die Sicherungseinheit 10 drei Phasen auf, wobei für jede der Phasen die vorstehend erläuterte Sicherungskomponente 11 im Kabelanschlussraum vorhanden ist. Die drei Sicherungskomponenten 11 sind dabei etwa parallel nebeneinander angeordnet, wie dies aus den Perspektivdarstellungen der Figuren 1a, 2a hervorgeht.

Die Sicherungseinheit 10 weist einen Anzeigemechanismus 50 auf, der mit allen drei Sicherungskomponenten 11 gekoppelt ist, und der ortsfest am Boden des Kabelanschlussraums angeordnet ist. Der Anzeigemechanismus 50 weist eine (nicht-dargestellte) Welle auf, die sich quer zur Längsrichtung erstreckt und unterhalb von allen drei Sicherungskomponenten 11 vorhanden ist. Der Welle ist zumindest eine (nicht-dargestellte) Feder zugeordnet, die versucht, die Welle in eine Drehstellung zu bewegen, die einem Bereit-Zustand entspricht.

Jede der drei Sicherungskomponenten 11 ist mit einer Stange 52 versehen, die einen angehobenen und einen abgesenkten Zustand einnehmen kann. Eine (nicht-dargestellte) Feder versucht, die Stange 52 in Richtung des Pfeils 53 in die angehobene Stellung zu bewegen. Jede der drei Stangen 52 wirkt derart auf die Welle ein, dass keine Drehbewegung der Welle möglich ist, solange eine der drei Stangen 52 sich in ihrem angehobenen Zustand befindet. Hierzu ist die Welle mit drei (nicht-dargestellten) Hebeln versehen, die mit den drei Stangen 52 der drei Sicherungskomponenten 11 derart zusammenwirken, dass jede der Stangen 52 eine Bewegung des zugehörigen Hebels blockiert, solange sich die jeweilige Stange 52 in ihrem angehobenen Zustand befindet.

Eine Drehbewegung der Welle in den Bereit-Zustand ist also nur möglich, wenn sich alle drei Stangen 52 der drei Sicherungskomponenten 11 nicht in ihrem angehobenen Zustand befinden, wenn also alle drei Stangen sich in ihrem abgesenkten Zustand befinden.

Im verbundenen Zustand einer einzelnen Sicherungskomponente 11 ist die zugehörige Stange 52 innerhalb des zugehörigen Verriegelungsmechanismus 41 mit dem dort vorhandenen zugehörigen Schieber 41 gekoppelt. Ist dieser zugehörige Schieber 41 nicht betätigt, so befindet sich die zugehörige Stange 52 in ihrem angehobenen Zustand. Wird der Schieber 41 jedoch manuell in Richtung des Pfeils 42 betätigt und erfolgt damit ein Übergang in den verriegelten Zustand, so geht die zugehörige Stange 52 in ihren abgesenkten Zustand über. Zusammen mit dem Schieber 41 wird die Stange 52 in dem abgesenkten Zustand verrastet. Bei einer Auslösung der Sicherung 26, wie auch bei einer Auslösung mit Hilfe des Bolzens 47 wird, wie erläutert, die Rastung beendet, so dass die Stange 52 wieder mittels der erwähnten Feder in ihren angehobenen Zustand übergeht.

Der Welle kann innerhalb des Anzeigemechanismus 50 ein (nicht-dargestellter) elektrischer Schalter zugeordnet sein, der ein EIN-Signal erzeugt, wenn sich die Welle in dem Bereit-Zustand befindet, und der ansonsten ein AUS-Signal abgibt. In Abhängigkeit von dem EIN- und dem AUS-Signal kann beispielsweise der zugehörige Leistungsschalter in seinen geschlossenen oder geöffneten Zustand geschaltet werden. Alternativ kann die Welle mit jeglichen anderen Mitteln gekoppelt sein, die mechanisch oder elektrisch in der Lage ist, den Bereit-Zustand anzuzeigen.

Funktional weist die Sicherungseinheit drei Zustände auf:
i) Eine einzelne Sicherungskomponente 11 befindet sich in dem verbundenen Zustand. Es liegt damit eine elektrische Verbindung von dem zugehörigen Leistungsschalter zu dem zugehörigen Kabel 23 vor. In diesem Zustand ist jedoch keine Verriegelung vorhanden und auch der Bereit-Zustand liegt nicht vor. Der Übergang von einem nicht-verbundenen Zustand in den verbundenen Zustand einer einzelnen Sicherungskomponente 11 kann durch ein manuelles Einführen der Sicherungskomponente 11 von einer Bedienperson erreicht werden.
ii) Eine einzelne Sicherungskomponente 11 befindet sich in dem verriegelten Zustand. Es liegt damit eine elektrische Verbindung von dem zugehörigen Leistungsschalter zu dem zugehörigen Kabel 23 vor und der Schlitten 25 der Sicherungskomponente 11 ist auf dem zugehörigen Träger 13 verriegelt. Der Bereit-Zustand kann, muss aber noch nicht vorliegen. Der Übergang von dem verbundenen Zustand in den verriegelten Zustand einer einzelnen Sicherungskomponente 11 kann durch eine manuelle Betätigung einer Bedienperson erreicht werden.
iii) Erst wenn sich alle drei Sicherungskomponenten 11 der Sicherungseinheit in ihrem verriegelten Zustand befinden, dann liegt der Bereit-Zustand vor. Ist eine der drei Sicherungskomponenten 11 nicht verriegelt, so liegt der Bereit-Zustand nicht vor.

Befindet sich die Sicherungseinheit 10 im Bereit-Zustand und löst eine der drei Sicherungen 26 aus oder wird eine der drei Sicherungskomponenten 11 manuell mit Hilfe des Bolzens 47 ausgelöst, so wird die zugehörige Sicherungskomponente 11 entriegelt und der Bereit-Zustand liegt nicht mehr vor. Statt dessen geht die ausgelöste Sicherungskomponente 11 in den verbundenen Zustand über. Damit wird gewährleistet, dass der Bereit-Zustand immer nur dann angezeigt wird, wenn alle Sicherungen intakt, verbunden und verriegelt sind.

Nach einer Auslösung ein der Sicherungen 26 oder nach einer manuellen Auslösung einer der Sicherungskomponenten 11 kann die ausgelöste Sicherung 26 oder die entsprechende Sicherungskomponente 11 ausgetauscht und wieder manuell verriegelt werden, so dass die Sicherungseinheit 10 wieder in ihren Bereit-Zustand übergeht.

Es versteht sich, dass die vorstehend genannten funktionalen Zusammenhänge nicht nur mit Hilfe des erläuterten Verriegelungsmechanismus 40 und Anzeigemechanismus 50 realisiert werden können. Statt dessen ist es auch möglich, dass andere mechanische oder elektrische Vorrichtungen vorgesehen sind, mit denen dieselben Funktionen erreichbar sind.

## Patentansprüche

1. Sicherungseinheit (10) für ein Schaltfeld einer elektrischen Schaltanlage, mit mindestens zwei Sicherungen (26), die mit jeweils zugehörigen elektrischen Komponenten des Schaltfelds verbindbar sind, wobei jede der Sicherungen (26) auf einem Schlitten (25) angeordnet ist, wobei das Schaltfeld Träger (13) aufweist, wobei der Schlitten (25) und der Träger (13) derart aneinander angepasst sind, dass der Schlitten (25) auf dem Träger (13) aufsetzbar ist, und wobei jede der Sicherungen (26) aus einem verbundenen Zustand durch eine Bewegung des Schlittens (25) in einen nicht-verbundenen Zustand überführbar ist, **dadurch gekennzeichnet, dass** ein Anzeigemechanismus (50) vorgesehen ist, mit dem eine Verriegelung aller Schlitten anzeigbar ist.

2. Sicherungseinheit (10) nach Anspruch 1, wobei jede der Sicherungen (26) in dem verbundenen Zustand über an dem Schlitten (25) gehaltenen Stromschienen (29, 30) mit in dem Schaltfeld angeordneten Stromschienen (18, 21) elektrisch verbunden ist.

3. Sicherungseinheit (10) nach Anspruch 2, wobei jede der Sicherungen (26) in dem nicht-verbundenen Zustand keine elektrische Verbindung zu dem Schaltfeld besitzt.

4. Sicherungseinheit (10) nach einem der Ansprüche 1 bis 3, wobei jeder der Schlitten (25) zusammen mit der Sicherung (26) in dem nicht-verbundenen Zustand aus dem Schaltfeld herausnehmbar ist.

5. Sicherungseinheit (10) nach einem der Ansprüche 1 bis 4, wobei jeder der Schlitten (26) auf dem Träger (13) verschiebbar ist.

6. Sicherungseinheit (10) nach einem der Ansprüche 1 bis 5, wobei jede der Sicherungen (26) derart mit Hilfe von Halterungen (27) auf dem Schlitten (26) gehalten ist, dass zum Austausch der Sicherung (26) kein Werkzeug erforderlich ist.

7. Sicherungseinheit (10) nach einem der vorstehenden Ansprüche, wobei ein Verriegelungsmechanismus (40) vorgesehen ist, mit dem jeder der Schlitten (26) und der zugehörige Träger (13) miteinander verriegelbar sind.

8. Sicherungseinheit (10) nach Anspruch 7, wobei der Verriegelungsmechanismus (40) auf dem Schlitten (26) angeordnet ist, und wobei der Verriegelungsmechanismus (40) einen Schieber (41) aufweist, mit dem ein Stift in eine Öffnung des Trägers (13) verschiebbar ist.

9. Sicherungseinheit (10) nach einem der vorstehenden Ansprüche, wobei der Anzeigemechanismus (50) dem Schaltfeld zugeordnet ist, und wobei der Anzeigemechanismus (50) eine Welle aufweist, die nur dann in einen Bereit-Zustand übergehen kann, wenn alle Schlitten (26) verriegelt sind.

10. Sicherungseinheit (10) nach Anspruch 9, wobei jedem Schlitten (26) eine Stange (52) zugeordnet ist, und wobei mit jeder Stange (52) ein Übergang der Welle in den Bereit-Zustand blockierbar ist.

11. Sicherungseinheit (10) nach einem der vorstehenden Ansprüche, wobei jede der Sicherungen (26) einen verbundenen Zustand aufweisen kann, in dem die jeweilige Sicherung (26) mit den jeweils zugehörigen elektrischen Komponenten des Schaltfelds verbunden ist, wobei jede der Sicherungen (26) einen verriegelten Zustand aufweisen kann, in dem die jeweilige Sicherung (26) innerhalb des Schaltfelds verriegelt ist, und wobei ein Bereit-Zustand vorhanden ist, in dem alle Sicherungen (26) des Schaltfelds sich in ihrem verriegelten Zustand befinden, und der von dem Anzeigemechanismus (50) anzeigbar ist.

12. Sicherungseinheit (10) nach Anspruch 11, wobei ein Übergang in den verbundenen Zustand und/oder in den verriegelten Zustand jeweils manuell durchführbar ist.

13. Sicherungseinheit (10) nach einem der Ansprüche 11 oder 12, wobei im Bereit-Zustand eine Auslösung einer der Sicherungen (26) zu einer Aufhebung des verriegelten Zustands führt.

14. Sicherungseinheit (10) nach einem der Ansprüche 11 bis 13, wobei in Abhängigkeit von dem Bereit-Zustand eine der elektrischen Komponenten des Schaltfelds, beispielsweise ein Leistungsschalter, steuerbar ist.

15. Sicherungseinheit (10) nach einem der Ansprüche 11 bis 14, wobei die Sicherungseinheit (10) entsprechend einem der Ansprüche 1 bis 11 ausgebildet ist.

## Claims

1. A fuse unit (10) for a control panel of an electrical switch assembly, having at least two fuses (26), which can each be connected to respective associated electrical components of the control panel, each of the fuses (26) being disposed on a carriage (25), the control panel having supports (13), and the carriage (25) and the support (13) being adapted to one another such that the carriage (25) can be placed on the support (13), and each of the fuses (26) being capable of being converted from a connected state to a non-connected state by a motion of the carriage (25), **characterized in that** an indicator mechanism (50) is provided, with which locking of all the carriages can be indicated.

2. The fuse unit (10) of claim 1, wherein in the connected state, each of the fuses (26) is electrically connected via busbars (29, 30) that are retained on the carriage (25) to busbars (18, 21) that are located in the control panel.

3. The fuse unit (10) of claim 2, wherein in the non-connected state, each of the fuses (26) has no electrical connection with the control panel.

4. The fuse unit (10) of one of claims 1-3, wherein in the non-connected state, each of the carriages (25), together with the fuse (26), can be removed from the control panel.

5. The fuse unit (10) of one of claims 1-4, wherein each of the carriages (26) is displaceable on the support (13).

6. The fuse unit (10) of one of claims 1-5, wherein each of the fuses (25) is retained on the carriage (26) with the aid of retainers (2) in such a manner that no tool is needed for replacing the fuse (25).

7. The fuse unit (10) of one of the foregoing claims, wherein a locking mechanism (40) is provided, with which each of the carriages (26) and the associated supports (13) can be locked to one another.

8. The fuse unit (10) of claim 7, wherein the locking mechanism (40) is located on the carriage (26), and the locking mechanism (40) has a slide (41), with which a pin can be displaced into an opening in the support (13).

9. The fuse unit (10) of one of the foregoing claims, wherein the indicator mechanism (50) is assigned to the control panel, and the indicator mechanism (50) has a shaft, which can convert to a ready state only whenever all the carriages (26) are locked.

10. The fuse unit (10) of claim 9, wherein each carriage (26) is assigned a rod (52), and with each rod (52), a transition of the shaft to the ready state can be blocked.

11. The fuse unit (10) of one of the foregoing claims, wherein each of the fuses (26) can have a connected state, in which the respective fuse (26) is connected to the respective associated electrical components of the control panel, and each of the fuses (26) can have a locked state, in which the respective fuse (26) is locked inside the control panel, and there is a ready state, in which all the fuses (26) of the control panel are in their locked state, and which state can be indicated by the indicator mechanism (50).

12. The fuse unit (10) of claim 11, wherein a transition to the connected state and/or to the locked state can in each case be performed manually.

13. The fuse unit (10) of one of claims 11 or 12, wherein in the ready state, tripping of one of the fuses (26) leads to a cancellation of the locked state.

14. The fuse unit (10) of one of claims 11-13, wherein as a function of the ready state, one of the electrical components of the control panel, such as a power switch, can be controlled.

15. The fuse unit (10) of one of claims 11-14, wherein the fuse unit (10) is embodied in accordance with one of claims 1-11.

## Revendications

1. Coupe-circuit à fusibles (10) pour un tableau de distribution d'une installation de distribution électrique, pourvu d'au moins deux fusibles (26), lesquels peuvent être raccordés à des composants électriques respectivement associés du tableau de distribution, chacun des fusibles (26) étant disposé sur un chariot (25), le tableau de distribution comprenant des supports (13), le chariot (25) et le support (13) étant adaptés l'un à l'autre, de telle manière que le chariot (25) peut être posé sur le support (13), et chacun des fusibles (26) pouvant passer, à la suite d'un déplacement du chariot (25), d'un état raccordé à un état non raccordé, **caractérisé en ce qu'**un mécanisme d'affichage (50) permet d'afficher un verrouillage de tous les chariots.

2. Coupe-circuit à fusibles (10) selon la revendication 1, chacun des fusibles (26), dans l'état raccordé, étant raccordé électriquement à des barres conductrices (18, 21) disposées dans le tableau de distribution au moyen de barres conductrices (29, 30) retenues sur le chariot (25) .

3. Coupe-circuit à fusibles (10) selon la revendication 2, chacun des fusibles (26), dans l'état non raccordé, ne présentant aucun raccordement électrique au tableau de distribution.

4. Coupe-circuit à fusibles (10) selon l'une quelconque des revendications 1 à 3, chacun des chariots (25) pouvant être retiré du tableau de distribution conjointement avec le fusible (26) dans l'état non raccordé.

5. Coupe-circuit à fusibles (10) selon l'une quelconque des revendications 1 à 4, chacun des chariots (26) étant mobile sur le support (13).

6. Coupe-circuit à fusibles (10) selon l'une quelconque des revendications 1 à 5, chacun des fusibles (26) étant retenu sur le chariot (26) à l'aide d'éléments de retenue (27), de telle manière qu'aucun outil n'est nécessaire pour le remplacement du fusible (26).

7. Coupe-circuit à fusibles (10) selon l'une quelconque des revendications précédentes, un mécanisme de verrouillage (40) permettant de verrouiller ensemble chacun des chariots (26) et des supports (13) associés.

8. Coupe-circuit à fusibles (10) selon la revendication 7, le mécanisme de verrouillage (40) étant disposé sur le chariot (26), et le mécanisme de verrouillage (40) comprend un coulisseau (41) permettant de faire coulisser une broche dans une ouverture du support (13).

9. Coupe-circuit à fusibles (10) selon l'une quelconque des revendications précédentes, le mécanisme d'affichage (50) étant associé au tableau de distribution, et le mécanisme d'affichage (50) comprenant un arbre, lequel ne peut passer dans un état prêt à fonctionner que lorsque tous les chariots (26) sont verrouillés.

10. Coupe-circuit à fusibles (10) selon la revendication 9, une barre (52) étant associée à chaque chariot (26), et un passage de l'arbre dans l'état prêt à fonctionner pouvant être bloqué au moyen de chaque barre (52).

11. Coupe-circuit à fusibles (10) selon l'une quelconque des revendications précédentes, chacun des fusibles (26) pouvant comprendre un état raccordé dans lequel le fusible (26) respectif est raccordé aux composants respectivement associés du tableau de distribution, chacun des fusibles (26) pouvant comprendre un état verrouillé dans lequel le fusible (26) respectif est verrouillé à l'intérieur du tableau de distribution, et un état prêt à fonctionner étant présent, dans lequel tous les fusibles (26) du tableau de distribution se situent dans leur état verrouillé, et lequel peut être affiché par le mécanisme d'affichage (50).

12. Coupe-circuit à fusibles (10) selon la revendication 11, un passage à l'état raccordé et/ou à l'état verrouillé pouvant être mis en oeuvre pouvant être mis en oeuvre respectivement manuellement.

13. Coupe-circuit à fusibles (10) selon l'une quelconque des revendications 11 ou 12, un déclenchement d'un des fusibles (26), dans l'état prêt à fonctionner, mettant fin à l'état verrouillé.

14. Coupe-circuit à fusibles (10) selon l'une quelconque des revendications 11 à 13, un des composants électriques du tableau de distribution, par exemple un disjoncteur, pouvant être commandé en fonction de l'état prêt à fonctionner.

15. Coupe-circuit à fusibles (10) selon l'une quelconque des revendications 11 à 14, le coupe-circuit à fusibles (10) étant réalisé selon l'une quelconque des revendications 1 à 11.
